# EUROPÄISCHE PATENTSCHRIFT

(11) **EP 1 397 300 B1**
(45) Veröffentlichungstag und Bekanntmachung des Hinweises auf die Patenterteilung: **29.12.2004**
(21) Anmeldenummer: 02740332.8
(22) Anmeldetag: 10.05.2002
(51) Int. Cl.: B65G 21/10, B65B 59/00

(54) **FÖRDEREINRICHTUNG FÜR GEGENSTÄNDE IN VERPACKUNGSMASCHINEN**
TRANSPORT DEVICE FOR OBJECTS IN PACKAGING MACHINES
DISPOSITIF TRANSPORTEUR POUR OBJETS DANS DES MACHINES D'EMBALLAGE

(30) Priorität: 12.05.2001 DE 10123220
(43) Veröffentlichungstag der Anmeldung: 17.03.2004
(73) Patentinhaber: ROBERT BOSCH GMBH, 70442 Stuttgart (DE)
(72) Erfinder: WIEDUWILT, Ulrich, 73529 Schwäbisch Gmünd (DE); ZELLER, Johann, 71679 Asperg (DE)
(86) Internationale Anmeldenummer: PCT/DE2002/001688
(87) Internationale Veröffentlichungsnummer: WO 2002/092478

(56) Entgegenhaltungen:
- EP-A- 0 485 762
- CH-A- 418 956
- DE-A- 4 416 891
- DE-A- 19 731 084
- DE-A- 19 920 495
- US-A- 6 012 568

## Beschreibung

### Stand der Technik

Die Erfindung betrifft eine Fördereinrichtung für Gegenstände in Verpackungsmaschinen nach dem Oberbegriff des Anspruchs 1, wie sie aus der EP 0 485 762 B1 bekannt ist. Bei der bekannten Fördereinrichtung für Faltschachteln sind die Mitnehmer an endlos umlaufenden Förderketten angeordnet. Die Förderketten sind in den beiden Umlenkbereichen auf Kettenrädern gelagert, welche wiederum auf einer Nabe bzw. einer konzentrisch auf der Nabe angeordneten Hohlwelle befestigt sind. Die Winkellage der einen Nabe zu ihrer Hohlwelle ist mittels einer selbsthemmenden Einrichtung verstell- und fixierbar, um eine Formatanpassung hinsichtlich der Faltschachtelbreite zu ermöglichen. Ferner sind die beiden Naben mittels eines gemeinsamen Trägers miteinander verbunden, dessen Lage sich quer zu einer hinteren Gestellwand verstellen läßt, um somit eine Anpassung hinsichtlich unterschiedlicher Faltschachtellängen zu ermöglichen. Der bekannte Verstellmechanismus zur Anpassung an unterschiedliche Faltschachtelbreiten ist durch die Ausbildung als Nabe und konzentrisch um die Nabe angeordnete Hohlwelle relativ aufwendig aufgebaut, da die Hohlwelle komplex gestaltet sein muß, um sowohl die Antriebs-, als auch die Verstellfunktion erfüllen zu können.

### Vorteile der Erfindung

Die erfindungsgemäße Fördereinrichtung für Gegenstände in Verpackungsmaschinen mit den kennzeichnenden Merkmalen des Anspruchs 1 hat demgegenüber den Vorteil, daß sie relativ einfach aufgebaut ist. Dies wird erfindungsgemäß im wesentlichen dadurch erreicht, daß zwei zueinander parallel angeordnete Verstellwellen vorgesehen sind, die über ein Übertragungsmittel miteinander und mit der selbsthemmenden Einrichtung gekoppelt sind.

Weitere vorteilhafte Weiterbildungen der erfindungsgemäßen Fördereinrichtung für Gegenstände in Verpackungsmaschinen sind in den Unteransprüchen angegeben.

### Zeichnung

Ein Ausführungsbeispiel der Erfindung ist in der Zeichnung dargestellt und wird nachfolgend näher erläutert. Es zeigen:

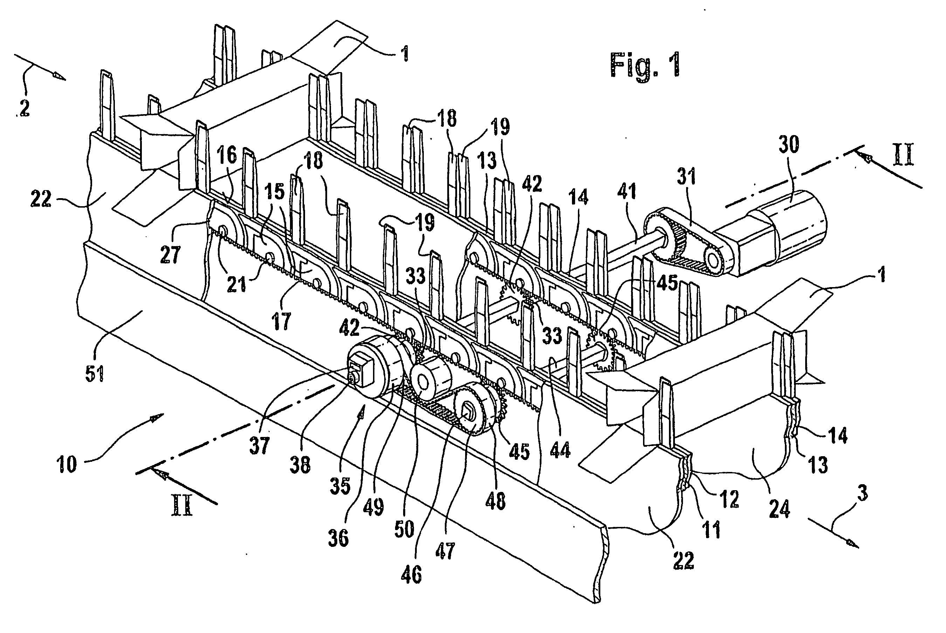

Figur 1 einen Teil einer erfindungsgemäßen Fördereinrichtung in einer vereinfachten perspektivischen Ansicht und

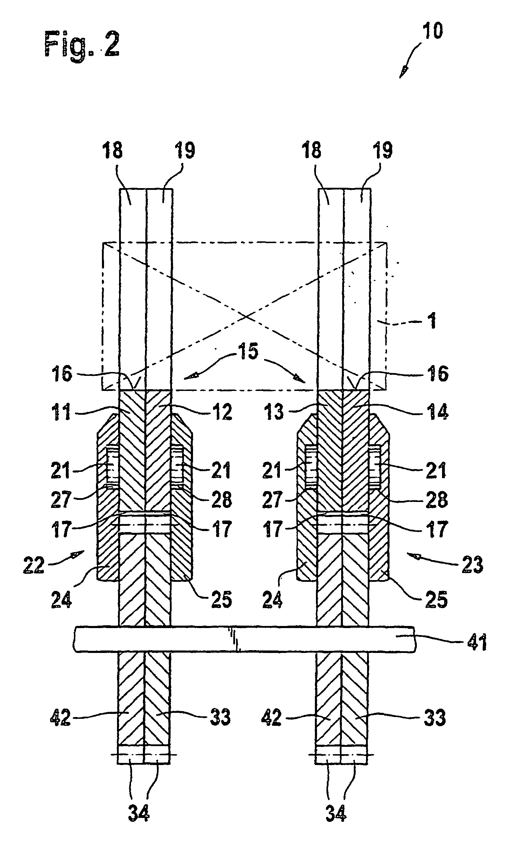

Figur 2 einen Teilschnitt im Bereich der Antriebswelle der Fördereinrichtung der Figur 1.

### Beschreibung des Ausführungsbeispiels

Die in den Figuren dargestellte Fördereinrichtung 10 dient zum Transport von Faltschachteln 1 innerhalb einer Kartoniermaschine. Die Faltschachteln 1 werden an einem Eingabebereich 2 in die Fördereinrichtung 10 mittels einer nicht dargestellten Überführeinrichtung eingegeben und von der Fördereinrichtung 10 in Förderrichtung 3 kontinuierlich gefördert. Während der Förderung wird in die Faltschachteln 1 jeweils ein Packgut, insbesondere Blisterstreifen, eingegeben. Eine derartige Kartoniermaschine ist beispielsweise in der DE 44 16 891 A1 offenbart, das überführen von Faltschachteln in eine gattungsgemäße Fördereinrichtung beispielsweise in der DE 199 20 495 A1. Sowohl die Kartonier-, als auch die Überführeinrichtung sind nicht erfindungswesentlich, weshalb im Folgenden nicht näher darauf eingegangen wird.

Die Fördereinrichtung 10, deren prinzipieller Aufbau bereits in der DE 197 31 084 A1 beschrieben ist, weist insgesamt vier parallel zueinander angeordnete Förderketten 11 bis 14 auf. Von den Förderketten 11 bis 14 liegen jeweils zwei Förderketten 11, 12 und 13, 14 mit ihren Seitenflächen gleitend aneinander an, wobei der Abstand der Förderketten 11, 12 zu den Förderketten 13, 14 der Länge der Faltschachteln 1 angepaßt ist. Die Förderketten 11 bis 14 bestehen aus miteinander in einem Überlappungsbereich verbundenen Kettengliedern 15, die im wesentlichen plattenförmig ausgebildet sind, und an deren Unterseite jeweils eine Verzahnung 17 ausgebildet ist. Von der Oberseite 16 der Kettenglieder 15 ragen Mitnehmer 18, 19 nach oben weg, zwischen denen die Faltschachteln 1 jeweils formschlüssig aufgenommen sind, wobei die Mitnehmer 18 der Förderketten 11, 13 im folgenden als vorauseilende Mitnehmer und die Mitnehmer 19 der Förderketten 12, 14 als nacheilende Mitnehmer bezeichnet werden. Die der Befestigung der Kettenglieder 15 untereinander dienenden Bolzen sind auf der Seite, auf der die jeweils zueinander benachbarten Förderketten 11, 12 und 13, 14 nicht aneinander liegen, als Führungszapfen 21 verlängert ausgebildet.

Die Förderketten 11, 12 und 13, 14 sind paarweise von jeweils einer leistenförmigen Führungsschiene 22, 23 umfaßt, die bis knapp unterhalb der Oberseite 16 der Kettenglieder 15 reicht. Diese Führungsschienen 22, 23 haben jeweils zwei Seitenwände 24, 25, die in Anlagekontakt mit der jeweiligen Förderkette 11, 12 und 13, 14 auf der Seite der Führungszapfen 21 sind. Die Führungszapfen 21 sind wiederum in jeweils einer Führungsnut 27, 28 in den Führungsschienen 22, 23 geführt. Parallel zur oberen Transportstrecke sind parallel zu den Führungsnuten 27, 28 weitere, nicht dargestellte Führungsnuten in den Seitenwänden 24, 25 ausgebildet, so daß die endlos umlaufenden Förderketten 11 bis 14 mit Ausnahme an ihren führungsmittelfreien Umlenkbereichen stets in den beiden Führungsschienen 22, 23 geführt sind. Der Antrieb der Förderketten 11 bis 14 erfolgt kontinuierlich oder taktweise mittels eines Antriebsmotors 30, der über einen Zahnriemen 31 eine polygen ausgebildete Antriebswelle 41 antreibt, die Antriebszahnräder 33, 42 trägt, deren Verzahnungen 34 mit den Verzahnungen 17 der Kettenglieder 15 in Eingriff stehen.

Um die Fördereinrichtung 10 unterschiedlichen Faltschachtelbreiten anpassen zu können, ist es erforderlich, die relative Lage der vorauseilenden Mitnehmer 18 zu den nacheilenden Mitnehmern 19, und somit der Förderketten 11, 13 zu den Förderketten 12, 14 verstellen zu können. Dazu ist eine selbsthemmende Verstelleinrichtung 35 vorgesehen, welche zwei relativ zueinander verstellbare und konzentrisch angeordnete Teile aufweist. Die bevorzugt vom Typ Harmonic Drive ® ausgebildete Verstelleinrichtung 35 weist ein hinterschneidungsfrei ausgebildetes Gehäuse 36 auf, wobei auf der dem Bediener zugewandten Seite ein Zählwerk 37 zur Anzeige der aktuell eingestellten Position der Förderketten 11 bis 14 bzw. einer entsprechenden Faltschachtelbreite, sowie eine Öffnung 38 für ein Verstellmittel angeordnet sind, mittels dessen sich die Postion der Förderketten 11 bis 14 zueinander wunschgemäß verstellen läßt.

Der eine Teil der Verstelleinrichtung 35 ist mit der vorzugsweise quadratischen Antriebswelle 41 verbunden. Auf der Antriebswelle 41 sind die zwei Zahnräder 42 drehfest befestigt. Dazu weist das jeweilige Zahnrad 42 jeweils eine dem Querschnitt der Antriebswelle 41 angepaßte Aufnahme auf. Die beiden Zahnräder 42 bzw. deren Verzahnungen stehen in Eingriff mit den Verzahnungen 17 der beiden Förderketten 11 und 13. Parallel und beabstandet zur Antriebswelle 41 ist eine Welle 44 angeordnet, die identisch zur Antriebswelle 41 ausgebildet ist. Auf der Welle 44 sind ebenfalls zwei Zahnräder 45 angeordnet, deren Verzahnungen jedoch im Eingriff mit den Verzahnungen 17 der Förderketten 12 und 14 stehen. Die Lagerung der Zahnräder 42 und 45 erfolgt in den Führungsschienen 22, 23 jeweils fluchtend zur zugeordneten Förderkette 11 bis 14. Auf der Seite der Verstelleinrichtung 35 ist die Welle 44 über die Führungsschiene 22 hinaus verlängert. Das entsprechende Wellenende 46 trägt eine Zahnscheibe 47. Die Zahnscheibe 47 ist von einem Zahnriemen 48 umschlungen, der mit einem konzentrisch die Antriebswelle 41 umgreifenden Adapter 49 verbunden ist, welcher sich an das Gehäuse 36 zumindest nahezu spaltfrei anschließt. Der Adapter 49 wirkt mit dem zweiten Teil der Verstelleinrichtung 35 zusammen, welcher über die Öffnung 38 zum ersten Teil und somit zur Antriebswelle 41 verstellbar ist. Zwischen dem Adapter 49 und der Zahnscheibe 47 ist ferner eine Spanneinrichtung 50 mit der Führungsschiene 22 verbunden, die die Spannung des Zahnriemens 48 einstellt.

Wenn die Verstelleinrichtung 35 über die Öffnung 38 betätigt wird, wird der Adapter 49 relativ zur Antriebswelle 41 verdreht. Die Drehbewegung überträgt sich über den Zahnriemen 48 und die Zahnscheibe 47 auf die Welle 44, deren Winkellage sich somit zur Antriebswelle 41 ändert. Da die beiden Wellen 41, 44 über die Zahnräder 42, 45 mit den jeweiligen Förderketten 11, 13 und 12, 14 gekoppelt sind, verändert sich somit auch die Position der Mitnehmer 18, 19 zueinander, wodurch die Formatanpassung an unterschiedliche Faltschachtelbreiten ermöglicht wird.

Um eine Anpassung an unterschiedliche Faltschachtellängen zu ermöglichen, ist es erforderlich, den Abstand der Führungsschienen 22, 23 zueinander verstellen zu können. Dazu ist die dem Bediener zugewandte vordere Führungsschiene 22 ortsfest am Gestell 51 der Fördereinrichtung 10 angeordnet. Demgegenüber ist die hintere Führungsschiene 23 parallel zur vorderen Führungsschiene 22 beweglich gelagert, wobei die Verstellung beispielsweise mittels eines Spindelantriebs oder mittels eines elektrischen Antriebs erfolgt. Wesentlich dabei ist, daß die Zahnräder 42, 45 zwar verdrehfest auf ihrer jeweiligen Welle 41, 44 befestigt, jedoch auf Wellen 41, 44 verschiebbar angeordnet sind. Da die Zahnräder 42, 45 ferner in den Führungsschienen 22, 23 gelagert sind, werden bei einer Verstellung der hinteren Führungsschiene 23 zur vorderen Führungsschiene 22 die Zahnräder 42, 45 zwangsläufig auf ihren Wellen 41, 44 mit verschoben.

Wenn, wie eben beschrieben, bei einer Formatanpassung die vordere Führungsschiene 22 ortsfest angeordnet ist, müssen die in der Führungsschiene 22 angeordneten Zahnräder 42, 45 selbstverständlich nicht auf ihrer jeweiligen Welle 41, 44 verschiebbar angeordnet sein, sondern sie können auch starr mit den Wellen 41, 44 verbunden sein. Bei Anwendungsfällen, in denen die Verstellung der Förderketten 11 bis 14 bzw. der Führungsschienen 22 und 23 symmetrisch zueinander erfolgen muß, müssen jedoch alle Zahnräder 42, 45 auf ihren zugehörigen Wellen 41, 44 verschiebbar angeordnet sein.

## Patentansprüche

1. Fördereinrichtung (10) für Gegenstände (1) in Verpackungsmaschinen, insbesondere für Faltschachteln in Kartoniermaschinen, mit Mitnehmer (18, 19) aufweisenden und parallel zueinander angeordneten Förderketten (11 bis 14), wobei zwischen vorauseilenden und nacheilenden Mitnehmern (18, 19) der Förderketten (11 bis 14) jeweils ein Gegenstand (1) formschlüssig aufgenommen ist, und wobei die Stellung der Förderketten (11 bis 14) und somit der Mitnehmer (18, 19) zueinander zur Formatanpassung mittels einer selbsthemmenden Einrichtung (35) verstellbar ist, **dadurch gekennzeichnet, daß** die mit den vorauseilenden Mitnehmern (18) und die mit den nacheilenden Mitnehmern (19) verbundenen Förderketten (11 bis 14) mit jeweils einer im Querschnitt polygonen und ortsfest in einem Gehäuserahmen (51) angeordneten Verstellwelle (41, 44) gekoppelt sind, wobei auf den Verstellwellen (41, 44) jeweils ein ortsfestes und ein auf der Verstellwelle (41, 44) verschiebbares Verstellelement (42, 45) formschlüssig angeordnet sind, die mit den Förderketten (11 bis 14) zusammenwirken, daß die eine Verstellwelle (41) die selbsthemmende Einrichtung (35) trägt und mit dieser gekoppelt ist und daß die andere Verstellwelle (44) mittels eines Übertragungsmittels (47, 48, 49) mit der selbsthemmenden Einrichtung (35) verbunden ist.

2. Fördereinrichtung nach Anspruch 1, **dadurch gekennzeichnet, daß** die Verstellwellen (41, 44) auf der Seite der ortsfesten Verstellelemente (42, 45) über die ortsfesten Verstellelemente (42, 45) hinaus verlängert sind und daß die Verstelleinrichtung (35) und das Übertragungsmittel (47, 49) auf den verlängerten Wellenenden angeordnet sind.

3. Fördereinrichtung nach Anspruch 1 oder 2, **dadurch gekennzeichnet, daß** die Verstellelemente Zahnräder (42, 45) sind, die mit ihrer Verzahnung in Zähne (17) der Förderketten (11 bis 14) formschlüssig eingreifen, daß das jeweils auf der Verstellwelle (41, 44) verschiebbare Zahnrad (42, 45) eine dem Querschnitt der Verstellwelle (41, 44) angepaßte polygone Aufnahme aufweist, daß die verschiebbaren Zahnräder (42, 45) in einer zur Formatanpassung quer zu den Verstellwellen (41, 44) verschiebbaren Schiene (22, 23) geführt sind und daß die Schiene (22, 23) als Träger für die Förderketten (11 bis 14) ausgebildet ist.

4. Fördereinrichtung nach einem der Ansprüche 1 bis 3, **dadurch gekennzeichnet, daß** das Übertragungsmittel einen Zahnriemen (48) umfasst, der einerseits mit einer auf einer der beiden Verstellwellen ( 41, 44) angeordneten Zahnscheibe (47) andererseits mit einem Teil (49) der Verstelleinrichtung (35) gekoppelt ist, wobei die Zahnscheibe (47) in Bezug auf die die selbsthemmende Einrichtung (35) tragende Verstellwelle (41) drehbeweglich und in Bezug auf die andere Verstellwelle (44) drehfest angeordnet ist.

5. Fördereinrichtung nach Anspruch 4, **dadurch gekennzeichnet, daß** die die Verstelleinrichtung (35) tragende Verstellwelle (41) von dem einen Teil (49) umfaßt ist, das sich an das Gehäuse (36) der selbsthemmenden Verstelleinrichtung (35) anschließt und daß das Gehäuse (36) hinterschneidungsfrei ausgebildet ist.

6. Fördereinrichtung nach einem der Ansprüche 1 bis 5, **dadurch gekennzeichnet, daß** die selbsthemmende Verstelleinrichtung (35) vom Typ Harmonic Drive ® ist und ein Zählwerk (37) zur Erfassung der Position der Förderketten (11 bis 14) trägt.

7. Fördereinrichtung nach Anspruch 4, **dadurch gekennzeichnet, daß** der Zahnriemen (48) mit einer Spanneinrichtung (50) gekoppelt ist, welche zwischen den beiden Verstellwellen (41, 44) angeordnet ist.

## Claims

1. Conveying arrangement (10) for conveying articles (1) in packaging machines, in particular for conveying folding boxes in cartoning machines, having conveying chains (11 to 14) which have carry-along elements (18, 19) and are arranged parallel to one another, in each case one article (1) being accommodated in a form-fitting manner between leading and trailing carry-along elements (18, 19) of the conveying chains (11 to 14), and it being possible for the position of the conveying chains (11 to 14) and thus of the carry-along elements (18, 19) in relation to one another to be adjusted, for format adaptation, by means of a self-locking arrangement (35), **characterized in that** the conveying chains (11 to 14) connected to the leading carry-along elements (18) and those connected to the trailing carry-along elements (19) are each coupled to a cross-sectionally polygonal adjusting shaft (41, 44) which is arranged in a stationary manner in a housing frame (51), there being arranged in a form-fitting manner on the adjusting shafts (41, 44) in each case a stationary adjusting element and one which can be displaced (42, 45) on the adjusting shaft (41, 44), these elements interacting with the conveying chains (11 to 14), **in that** one adjusting shaft (41) bears the self-locking arrangement (35) and is coupled thereto, and **in that** the other adjusting shaft (44) is connected to the self-locking arrangement (35) by a transmission means (47, 48, 49).

2. Conveying arrangement according to Claim 1, **characterized in that** the adjusting shafts (41, 44) are extended beyond the stationary adjusting elements (42, 45), to the side of the stationary adjusting elements (42, 45), and **in that** the adjusting arrangement (35) and the transmission means (47, 49) are arranged on the extended shaft ends.

3. Conveying arrangement according to Claim 1 or 2, **characterized in that** the adjusting elements are gearwheels (42, 45) which engage in a form-fitting manner, by way of their toothing formation, in teeth (17) of the conveying chains (11 to 14), **in that** the gearwheel (42, 45) which can be displaced on the adjusting shaft (41, 44) in each case has a polygonal mount which is adapted cross-sectionally to the adjusting shaft (41, 44), **in that** the displaceable gearwheels (42, 45) are guided in a rail (22, 23) which can be displaced transversely to the adjusting shafts (41, 44) for format adaptation, and **in that** the rail (22, 23) is designed as a carrier for the conveying chains (11 to 14).

4. Conveying arrangement according to one of Claims 1 to 3, **characterized in that** the transmission means comprises a toothed belt (48) which is coupled, on the one hand, to a pulley (47) arranged on one of the two adjusting shafts (41, 44) and, on the other hand, to part (49) of the adjusting arrangement (35), the pulley (47) being arranged in a rotatable manner in relation to the adjusting shaft (41) bearing the self-locking arrangement (35) and in a rotationally fixed manner in relation to the other adjusting shaft (44).

5. Conveying arrangement according to Claim 4, **characterized in that** the adjusting shaft (41) bearing the adjusting arrangement (35) is enclosed by the one part (49), which adjoins the housing (36) of the self-locking adjusting arrangement (35), and **in that** the housing (36) is designed without undercuts.

6. Conveying arrangement according to one of Claims 1 to 5, **characterized in that** the self-locking adjustment arrangement (35) is of the Harmonic Drive® type and bears a register (37) for detecting the position of the conveying chains (11 to 14).

7. Conveying arrangement according to Claim 4, **characterized in that** the toothed belt (48) is coupled to a tensioning arrangement (50) which is arranged between the two adjusting shafts (41, 44).

## Revendications

1. Dispositif transporteur (10) pour des objets (1) dans des empaqueteuses, notamment pour des boîtes de carton pliantes dans des encartonneuses, comprenant des chaînes transporteuses (11 à 14) présentant des doigts d'entraînement (18, 19) et disposées parallèlement les unes par rapport aux autres, un objet (1) étant reçu à chaque fois par complémentarité de forme entre des doigts d'entraînement (18, 19) amont et aval des chaînes transporteuses (11 à 14), et la position des chaînes transporteuses (11 à 14) et donc des doigts d'entraînement (18, 19) pouvant être réglée l'une par rapport à l'autre au moyen d'un système autobloquant (35) pour s'adapter au format,
**caractérisé en ce que**
les chaînes transporteuses (11 à 14) reliées aux doigts d'entraînement amont (18) et celles reliées aux doigts d'entraînement aval (19) sont reliées à chaque fois à un arbre de réglage (41, 44) ayant une section polygonale et fixé dans un cadre de boîtier (51), avec chaque fois un élément de réglage (42, 45) fixe et un pouvant se déplacer sur l'arbre de réglage (41, 44) disposés par complémentarité de forme sur les arbres de réglage (41, 44) et coopérant avec les chaînes transporteuses (11 à 14), un des arbres de réglage (41) porte le système autobloquant (35) en étant relié à celui-ci et l'autre arbre de réglage (44) est relié au système autobloquant (35) par le biais d'un moyen de transfert (47, 48, 49).

2. Dispositif transporteur selon la revendication 1,
**caractérisé en ce que**
les arbres de réglage (41, 44) sont prolongés sur le côté des éléments de réglage fixes (42, 45) par les éléments de réglage (42, 45) fixes et le système de réglage (35) et le moyen de transfert (47, 49) sont disposés sur les extrémités d'arbres prolongées.

3. Dispositif transporteur selon la revendication 1 ou 2,
**caractérisé en ce que**
les éléments de réglage sont des pignons (42, 45) qui s'engrènent au moyen de leur denture par complémentarité de forme dans des dents (17) des chaînes transporteuses (11 à 14), chaque pignon (42, 45) pouvant être déplacé à chaque fois sur les arbres de réglage (41, 44) présente un logement polygonal adapté à la section des arbres de réglage (41, 44), les pignons (42, 45) mobiles sont dirigés dans un rail (22, 23) pouvant être déplacé transversalement aux arbres de réglage (41, 44) pour s'adapter au format et le rail (22, 23) est configuré sous la forme de support pour les chaînes transporteuses (11 à 14).

4. Dispositif transporteur selon l'une des revendications 1 à 3,
**caractérisé en ce que**
le moyen de transfert comprend une courroie crantée (48) qui est couplée d'une part à un disque denté (47) disposé sur l'un des deux arbres de réglage (41, 44) et d'autre part à une partie (49) du système de réglage (35), le disque denté (47) étant mobile en rotation par rapport à l'arbre de réglage (41) portant le système autobloquant (35) en étant solidaire en rotation par rapport à l'autre arbre de réglage (47).

5. Dispositif transporteur selon la revendication 4,
**caractérisé en ce que**
l'arbre de réglage (41) portant le système de réglage (35) est composé d'une partie (49) raccordée au boîtier (36) du système de réglage autobloquant (35) et le boîtier (36) est configuré sans découpe arrière.

6. Dispositif transporteur selon l'une des revendications 1 à 5,
**caractérisé en ce que**
le système de réglage autobloquant (35) est du type Harmonie Drive ® et porte un compteur (37) pour déterminer la position des chaînes transporteuses (11 à 14).

7. Dispositif transporteur selon la revendication 4,
**caractérisé en ce que**
la courroie crantée (48) est couplée à un système de serrage (50) disposé entre les deux arbres de réglage (41, 44).
